# EUROPÄISCHE PATENTANMELDUNG

(11) **EP 1 710 551 A1**
(43) Veröffentlichungstag der Anmeldung: **11.10.2006**
(21) Anmeldenummer: 05005988.0
(22) Anmeldetag: 18.03.2005
(51) Int. Cl.: G01M 7/02, G01H 1/00, F01D 21/00, G01M 15/14

(54) **Verfahren zum Messen des Schwingungsverhaltens einer Testschaufel einer Turbine**

(71) Anmelder: SIEMENS AKTIENGESELLSCHAFT, 80333 München (DE)
(72) Erfinder: Richter, Christoph, Dr., 49477 Ibbenbüren (DE)

(57) **Zusammenfassung**

Die Erfindung betrifft ein Verfahren zum Messen des Schwingungsverhaltens mindestens einer Testschaufel (10) einer Turbine. Erfindungsgemäß ist das Verfahren gekennzeichnet durch die Schritte: Abbilden der Kopplung der mindestens einen Testschaufel (10) an mindestens einer Modellschaufel während eines realen Betriebs der Turbine als rechentechnisches Modell, Umsetzen des rechentechnischen Modells in kinematische Koppelbedingungen für die mindestens eine Testschaufel (10), Ausüben von Kräften an der mindestens einen Testschaufel entsprechend den kinematischen Koppelbedingungen und Messen des resultierenden Schwingungsverhaltens der mindestens einen Testschaufel (10).

## Beschreibung

Die Erfindung betrifft ein Verfahren zum Messen des Schwingungsverhaltens mindestens einer Testschaufel einer Turbine.

Bei der Herstellung von aus mehreren Einzelschaufeln bestehenden Turbinen, wie etwa Dampfturbinen, ist es zum Ausschließen des Auftretens einer Resonanzkatastrophe wichtig, sicherzustellen, dass der Schaufelverband eine Eigenfrequenz aufweist, die im Realbetrieb der Turbine nicht angeregt wird.

Aus diesem Grunde werden im Stand der Technik bei der Herstellung der Turbinenschaufeln im Rahmen der Qualitätssicherung die Eigenfrequenzen schwingungsaffiner Turbinenschaufeln einzeln gemessen und protokolliert. Die Eigenfrequenzen der Turbinenschaufeln müssen jeweils in bestimmten Frequenzbändern liegen, um einen sicheren Betrieb der Turbine zu gewährleisten. Daher werden die Turbinenschaufeln mit geeigneten gemessenen Eigenfrequenzen ausgewählt. Dabei wird davon ausgegangen, dass die Turbinenschaufeln auch im montierten Zustand in der Turbine bei Drehzahl die gemessenen Eigenfrequenzen aufweisen.

Um diese Annahme jedoch zu bestätigen, wird im Stand der Technik eine Validierung der Messergebnisse im Schaufelverband durchgeführt. Dazu werden eine Reihe der gemessenen Turbinenschaufeln vollständig am Läufer der Turbine montiert. Daraufhin werden die Eigenfrequenzen des Schaufelverbands gemessen und eine Abstimmung der montierten Schaufeln auf Grundlage dieser Messdaten vorgenommen. Dabei werden teilweise Schaufelkranzmessungen bei Läuferstillstand durchgeführt aber auch zusätzlich Messungen unter Drehung des Läufers.

Der zur Validierung des Schaufelverbandes zu betreibende Aufwand ist jedoch sehr groß. Allerdings hat es sich gezeigt, dass auf die Validierung des Schaufelverbandes nicht verzichtet werden kann, da die im Rahmen der Qualitätssicherung erhobenen Daten bezüglich der Eigenfrequenzen der einzelnen Schaufeln nur unzureichende Genauigkeit in Bezug auf deren Verhalten im Schaufelverband aufweisen.

Der Erfindung liegt die Aufgabe zugrunde, ein Verfahren zum Messen des Schwingungsverhaltens mindestens einer Testschaufel einer Turbine bereitzustellen, mit dem das Schwingungsverhalten der mindestens einen Testschaufel im Schaufelverband mit großer Genauigkeit vorhergesagt werden kann.

Erfindungsgemäß wird diese Aufgabe mit einem Verfahren der eingangs genannten Art gelöst, welches durch die folgenden Schritte gekennzeichnet ist: Abbilden einer Kopplung der mindestens einen Testschaufel an mindestens einer Modellschaufel während eines realen Betriebs der Turbine als rechentechnisches Modell, Umsetzen des rechentechnischen Modells in kinematische Koppelbedingungen für die mindestens eine Testschaufel, Ausüben von Kräften an der mindestens einen Testschaufel entsprechend den kinematischen Koppelbedingungen und Messen des resultierenden Schwingungsverhaltens der mindestens einen Testschaufel. Bei der erfindungsgemäßen Modellschaufel handelt es sich um eine rechentechnisch simulierte Turbinenschaufel.

Die Erfindung beruht auf der Erkenntnis, dass ein bei einer ungekoppelten Messung ermitteltes Schwingungsverhalten einer Testschaufel keine verlässlichen Rückschlüsse auf das Schwingungsverhalten im gekoppelten Zustand zulässt. So treten Fehler in der frequenzdefinierenden Massen- und Steifigkeitsverteilung im freistehenden und im gekoppelten Schwingungsverhalten unterschiedlich zu Tage. D.h. ein bestimmter Massen/Steifigkeitsfehler beeinflusst beispielsweise das freistehend gemessene Schwingungsverhalten nur gering, das gekoppelte Schwingungsverhalten aber in hohem Maße.

Die Erfindung sieht daher vor, die Kopplung mittels eines rechentechnischen Modells zu berücksichtigen und die Testschaufel mit den sich aus der Kopplung ergebenden Kräften zu beaufschlagen. Dabei werden vorzugsweise diese Kräfte so eingestellt, dass eine sich aus der Kopplung ergebende Verschiebung der Testschaufel bewirkt wird. Zur Bestimmung der zur Einprägung der erforderlichen Verschiebung benötigten Kräfte ist ein elektronischer Regelkreis vorgesehen. Das daraufhin gemessene resultierende Schwingungsverhalten der Testschaufel beinhaltet dann auch den Einfluss mindestens einer weiteren, mit der Testschaufel gekoppelten Turbinenschaufel. Das rechentechnische Modell kann insbesondere eine komplexwertige Modellierung einer Schaufel umfassen.

Es ist erfindungsgemäß vorteilhaft, wenn das Umsetzen des rechentechnischen Modells in kinematische Koppelbedingungen für die mindestens eine Testschaufel die folgenden Schritte umfasst: Ausüben von Schwingungsanregungskräften auf die mindestens eine Testschaufel, kontinuierliches Messen des kinematischen Verhaltens der mindestens einen Testschaufel und Umsetzen des kinematischen Verhaltens der mindestens einen Testschaufel mittels des rechentechnischen Modells in aus der Kopplung mit der mindestens einen Modellschaufel resultierende kinematische Koppelbedingungen für die mindestens eine Testschaufel, und/oder dass die an der mindestens einen Testschaufel entsprechend den kinematischen Koppelbedingungen ausgeübten Kräfte kontinuierlich an die iterativ bestimmten kinematischen Koppelbedingungen angepasste Korrekturkräfte zur Berücksichtigung des Einflusses der Kopplung mit der mindestens einen Modellschaufel auf die Schwingung der Testschaufel enthalten. Das Ausüben von Schwingungsanregungskräften auf die mindestens eine Testschaufel kann durch einen Anregungsstoß und/oder kontinuierlich erfolgen. Das kontinuierliche Messen des kinematischen Verhaltens der mindestens einen Testschaufel erfolgt vorzugsweise an einer Koppelstelle zu einer Nachbarschaufel im Schaufelverband. Das damit erzielte Messergebnis des resultierenden Schwingungsverhaltens der Testschaufel ist eine gute Annäherung an das tatsächliche Verhalten der Schaufel im Verband, da die durch die Schwingung der Testschaufel mittels der Kopplung an einer weiteren Schaufel erzeugte Bewegung wieder auf die Testschaufel zurückgekoppelt wird. Damit wird das reale Verhalten der Testschaufel im Schaufelverband simuliert.

In erfindungsgemäß vorteilhafter Ausführungsform werden weiterhin die Kräfte entsprechend den kinematischen Koppelbedingungen von einer durch mindestens einen Regelkreis gesteuerten Einrichtung ausgeübt. In weiterhin erfindungsgemäß zweckmäßiger Ausführungsform umfasst die Einrichtung mindestens einen Sensor und mindestens einen Aktuator. Der Sensor wird dazu verwendet, das kinematische Verhalten der zur Schwingung angeregten, mindestens einen Testschaufel, vorzugsweise an einem Koppelufer zu einer Nachbarschaufel im Schaufelverband aufzuzeichnen. Dazu kann zum Beispiel ein Piezoaufnehmer verwendet werden. Das derart gemessene kinematische Verhalten der Testschaufel kann dann etwa als Eingangsgröße für eine Steuereinrichtung verwendet werden, in der das gemessene kinematische Verhalten der mindestens einen Testschaufel mittels des rechentechnischen Modells in aus der Kopplung mit einer weiteren Modellschaufel resultierende kinematische Koppelbedingungen umgesetzt wird. Die diesen kinematischen Koppelbedingungen entsprechenden Kräfte können dann mittels des Aktuators wieder auf die Testschaufel ausgeübt werden. Diese Kräfte werden vom Aktuator vorzugsweise auf das Koppelufer der Testschaufel ausgeübt, welches dem Koppelufer entgegengesetzt ist, an dem der Sensor anliegt. Dabei prägt der Aktuator vorzugsweise eine sich aus der kinematischen Koppelbedingungen ergebende Verschiebung auf die Testschaufel ein, d.h. die einwirkende Kraft weist einen zur Ausübung der benötigten Verschiebung entsprechenden Betrag auf. Damit kann die durch die Schwingung der Testschaufel über die weitere damit gekoppelte Schaufel hervorgerufene Rückkopplung wieder auf die Testschaufel zurückgeführt werden. Die Steuerung des Aktuators mittels dieses Regelkreises ermöglicht die Erzeugung einer Schwingung in der Testschaufel, die der tatsächlichen Schwingung der Testschaufel im Schaufelverband theoretisch äquivalent ist und praktisch sehr nahe kommt.

In erfindungsgemäß vorteilhafter Ausführungsform ist die als rechentechnisches Modell abgebildete Kopplung einer Testschaufel an mindestens einer Modellschaufel eine Kopplung oberhalb des Fußbereichs der Schaufeln. Eine solche Kopplung liegt häufig bei Niederdruckdampfturbinenschaufeln vor, die mit einer schließenden Deckplatte versehen sind. Da eine Kopplung von Schaufeln oberhalb des Fußbereichs die Schwingungsform der freischwingenden Schaufel stark beeinflusst, führt das erfindungsgemäße Verfahren bei derart gekoppelten Schaufeln zu besonders vorteilhaften Ergebnissen. Das heißt, je nachdem, ob die Schaufel freistehend oder im stark gekoppelten Verband schwingt, werden bei mit Koppelelementen oberhalb des Fußes gekoppelten Schaufeln stark unterschiedliche Schwingungsformen beobachtet. Eine Simulation dieser durch die Kopplung bedingten Schwingungsform lässt sich mit dem erfindungsgemäßen Verfahren hervorragend durchführen.

Es ist weiterhin erfindungemäß zweckmäßig, wenn das rechentechnische Modell durch komplexwertige kinematische Koppelbedingungen abgebildet wird. Die Kopplung von Schaufeln, insbesondere über Koppelelemente oberhalb der Fußplatte, lässt sich mathematisch und rechentechnisch besonders gut als zyklisch-periodisches Modell erfassen. Die beherrschenden Gleichungen dieses Problems liefern komplexwertige kinematische Koppelbedingungen.

Ferner ist es zweckmäßig, wenn die komplexwertigen kinematischen Koppelbedingungen durch Ausüben von Kräften, insbesondere Korrekturkräften, an zwei Schaufeln wiedergegeben werden. In diesem Fall umfasst die Einrichtung zwei Sensoren und zwei Aktuatoren, von denen jeweils einer einer der beiden Schaufeln zugeordnet ist. Das Wiedergeben der kinematischen Koppelbedingungen kann geschehen, indem die von den Sensoren gemessenen Bewegungen der einen Koppelufer der Schaufeln als Realteil bzw. Imaginärteil eines komplexwertigen rechentechnischen Modells verwendet werden. Aus den sich aus dem Modell ergebenden komplexwertigen Koppelbedingungen werden dann zwei realwertige Steuersignale für die Schaufeln abgeleitet.

Es ist weiterhin erfindungsgemäß vorteilhaft, wenn eine der beiden Schaufeln, an denen Kräfte, insbesondere Korrekturkräfte, ausgeübt werden, die mindestens eine Testschaufel ist und die andere der beiden Schaufeln eine in Verbindung mit unterschiedlichen Testschaufeln verwendete Referenzschaufel ist. Die Referenzschaufel, die auch als Masterschaufel bezeichnet wird, ist eine mit besonders engen Fertigungstoleranzen gefertigte Turbinenschaufel. Da diese Referenzschaufel durchgehend im Teststand verbleibt, d.h. die unterschiedlichen zu messenden Testschaufeln immer in Kombination mit ein und derselben Referenzschaufel betrieben werden, stellt die Referenzschaufel eine feste Bezugsgröße bei den aufeinander folgenden Messungen dar. Damit lässt sich die Verlässlichkeit der Simulation erhöhen.

In erfindungsgemäß zweckmäßiger Ausführungsform ist das Verfahren gekennzeichnet durch den Schritt: Rückschließen auf das Schwingungsverhalten der mindestens einen Testschaufel während eines realen Betriebs der Turbine basierend auf den Ergebnissen der Messung des Schwingungsverhaltens der mindestens einen, den kinematischen Koppelbedingungen unterworfenen Testschaufel. Damit entfällt die Notwendigkeit, zum Zweck der Bestimmung des Schwingungsverhaltens der Testschaufel im Schaufelverband der Turbine die Testschaufel aufwändig zusammen mit anderen Schaufeln auf dem Läufer zu montieren und entsprechende Messungen am Schaufelverband durchzuführen. Damit wird der Qualitätssicherungsaufwand der hergestellten Turbine erheblich verringert, da das Schwingungsverhalten der einzelnen Turbinenschaufeln im realen Betrieb der Turbine mittels einfacher Labormessungen bestimmt werden kann. Aufwändige Schleuderbunkermessungen sind nicht mehr erforderlich.

Es ist außerdem zweckmäßig, wenn aus dem rückgeschlossenen Schwingungsverhalten der mindestens einen Testschaufel während eines realen Betriebs der Turbine die Eigenfrequenz der Testschaufel während des realen Betriebs der Turbine bestimmt wird. Damit lässt sich die Eigenfrequenz der Testschaufel im realen Betrieb verlässlich bestimmen. Die zur Vermeidung einer Resonanzkatastrophe herkömmlich benötigten Sicherheiten in den Frequenzabständen zu den Resonanzen im Betrieb der Turbine können damit reduziert werden.

In erfindungsgemäß vorteilhafter Ausführungsform wird beim Rückschließen auf das Schwingungsverhalten der mindestens einen Testschaufel während eines realen Betriebs der Turbine eine Frequenzveränderung an der Schaufel aufgrund unterschiedlicher Eigenschaften eines Rotors vernachlässigt. Dieser Lösung liegt die Erkenntnis zugrunde, dass der Einfluss der Frequenzabsenkung im Falle von weichen Läufern innerhalb einer Stufe (z.B. Scheibenläufer) im Falle von Koppelelementen oberhalb der Fußplatte vernachlässigbar gering ist. Damit lassen sich mit dieser erfindungsgemäßen Ausführungsform effizient die Schwingungseigenschaften der Testschaufel bestimmen.

In erfindungsgemäß zweckmäßiger Ausführungsform wird beim Rückschließen auf das Schwingungsverhalten der mindestens einen Testschaufel während eines realen Betriebs der Turbine der Einfluss der Fliehkraft als rechentechnisches Modell abgebildet und berücksichtigt. Der Einfluss der Fliehkraft ist rechentechnisch gut vorhersehbar und wenig sensitiv gegenüber den Kopplungseigenschaften der Koppelelemente zwischen den Schaufeln der Turbine. Damit lassen sich mittels rechentechnischer Berücksichtigung des Einflusses der Fliehkraft hervorragende Ergebnisse sowohl bezüglich der Schwingungseigenschaften der einzelnen Schaufeln im Schaufelverband als auch der Schwingungseigenschaften der Gesamtturbine erzielen.

In erfindungsgemäß zweckmäßiger Ausführungsform wird beim Rückschließen auf das Schwingungsverhalten der mindestens einen Testschaufel auf das Schwingungsverhalten des gesamten Schaufelverbandes der Turbine im realen Betrieb rückgeschlossen. Damit kann mittels der per Einzelschaufelmessung erlangten Ergebnisse das Schwingungsverhalten der gesamten Turbine mit großer Genauigkeit vorhergesagt werden, was eine aufwändige Endkontrolle überflüssig macht.

Nachstehend wird ein Ausführungsbeispiel eines erfindungsgemäßen Verfahrens anhand der beigefügten schematischen Zeichnungen näher erläutert. Es zeigt:
- Fig. 1: einen stark vereinfachten Querschnitt einer im Stand der Technik verwendeten Niederdruckdampfturbine, bei der die einzelnen Turbinenschaufeln mit schließenden Deckplatten verbunden sind, sowie
- Fig. 2: eine vereinfachte Darstellung einer Messanordnung zum Messen des Schwingungsverhaltens einer Testschaufel gemäß einer Ausführungsform des erfindungsgemäßen Verfahrens.

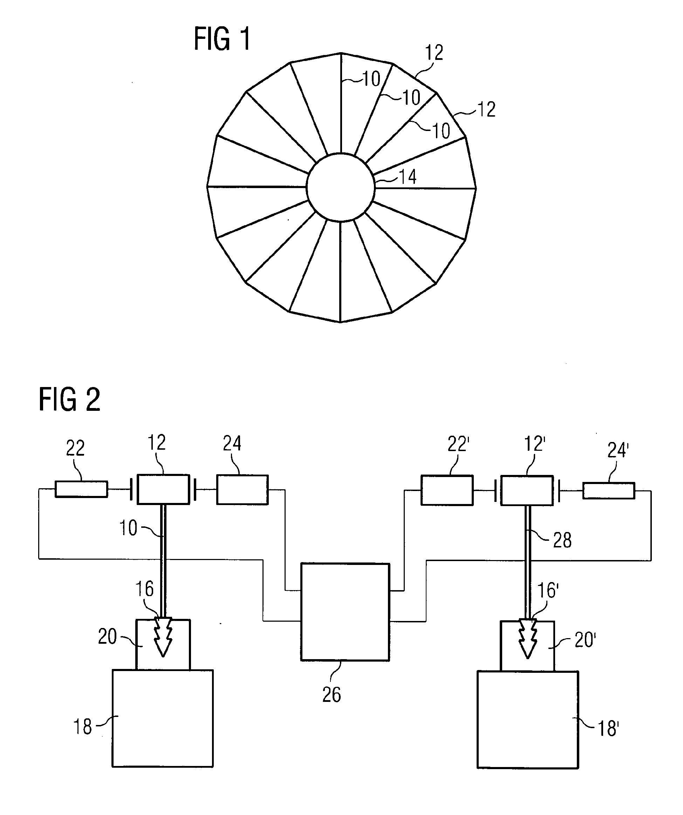

Eine bei thermischen Heizkraftwerken verwendete Niederdruckdampfturbine weist, wie in Fig. 1 gezeigt, einen Läufer 14 auf, an dem sternförmig eine Vielzahl von Turbinenschaufeln 10 befestigt sind. Diese Turbinenschaufeln 10 sind an ihren nicht läuferseitigen Enden mit Deckplatten 12 miteinander verbunden. Beim Betrieb der Dampfturbine strömt unter Druck stehender Wasserdampf in Längsrichtung des in Fig. 1 im Querschnitt gezeigten, als Welle ausgebildeten Läufers 14. Da die einzelnen Turbinenschaufeln 10 schräg am Läufer 14 angeordnet sind, erzeugt der durch die Turbine strömende Wasserdampf eine Drehbewegung des Läufers 14 um dessen Längsachse. Dabei werden die einzelnen Turbinenschaufeln 10 der Turbine zu Schwingungen angeregt. Es muss allerdings vermieden werden, dass die Frequenzen dieser Schwingungen sich den Eigenfrequenzen der miteinander gekoppelten Schaufeln annähern. Dies würde zu einer Resonanzkatastrophe führen, wodurch die Turbinenschaufeln 10 beschädigt würden.

Zur Bestimmung der Eigenfrequenzen der einzelnen Turbinenschaufeln 10 unter dem Einfluss der über die Deckplatten 12 hergestellten Kopplung mit dem benachbarten Turbinenschaufeln 10, wird die in Fig. 2 gezeigte erfindungsgemäße Messanordnung verwendet. Diese Anordnung weist zwei voneinander unabhängige Schwingungsanreger 18 und 18'auf, die jeweils ein Schwungelement 20 bzw. 20' beinhalten. An dem ersten Schwungelement 20 wird eine neu gefertigte Turbinenschaufel 10 als Testschaufel mittels eines an deren Fußbereich angeordneten tannenbaumförmigen Einsteckelements 16 befestigt. Analog dazu wird am zweiten Schwungelement 20', das dem zweiten Schwingungsanreger 18' zugeordnet ist, eine Referenzschaufel 28 ebenfalls an deren tannenbaumförmigen Einsteckelement 16' befestigt. Die Referenzschaufel 28 ist mit engen Toleranzen gefertigt und wird bei Messungen unterschiedlicher Testschaufeln verwendet. Das heißt, die Referenzschaufel 28 verbleibt in der Messanordnung und dient als Bezugsgröße für Messungen an verschiedenen Testschaufeln. An ihrem dem Einsteckelement 16 bzw. 16' entgegengesetzten Ende weist sowohl die als Testschaufel eingesetzte Turbinenschaufel 10 als auch die Referenzschaufel 28 eine Deckplatte 12 bzw. 12' auf. Diese Deckplatten weisen jeweils ein rechtes und ein linkes Koppelufer zur Koppelung mit dem jeweils gegenüberliegenden Koppelufer einer benachbarten Turbinenschaufel auf. Diese Koppelufer sind vorzugsweise in einer Zickzack-Form ausgeführt, wobei lediglich ein schräg verlaufender Abschnitt des zickzack-förmigen Koppelufers mit dem entsprechenden Abschnitt des gegenüberliegenden Koppelufers einer benachbarten Turbinenschaufel in Kontakt tritt.

Die beiden in der Messanordnung montierten Schaufeln 10 und 28 werden nun mittels dem jeweiligen Schwungelement 20 bzw. 20' in Schwingung versetzt. Dabei kann zur Ermittlung der Resonanzfrequenz die Anregungsfrequenz kontinuierlich über die Zeit erhöht werden. Die Schwingungsbewegung sowohl der als Testschaufel eingesetzten Turbinenschaufel 10 als auch der Referenzschaufel 11 wird nun jeweils mit einem der jeweiligen Schaufel zugeordneten Sensor 22 bzw. 22' jeweils am linken Koppelufer der Deckplatte 12 bzw. 12' der entsprechenden Schaufel gemessen. Die Sensoren können aus Piezoaufnehmern gebildet sein. Die Messergebnisse werden einer Steuereinrichtung 26 zugeführt.

Die Informationen aus den Messergebnissen werden in der Steuereinrichtung 26 mittels eines zyklisch-periodischen Modells rechentechnisch verarbeitet. Dabei dient das kinematische Verhalten der jeweils linksseitigen Koppelufer der beiden Schaufeln 10 und 28 als Realteil bzw. Imaginärteil eines komplexwertigen rechentechnischen Modells. Das zyklisch-periodische Modell bildet eine Kopplung für jede der beiden Schaufeln 10 und 28 mit jeweils einer weiteren Schaufel, die hier als Modellschaufel bezeichnet wird, während eines realen Betriebs der Turbine ab. Als Ergebnis der Umsetzung der von den Sensoren 22 bzw. 22' gelieferten Eingangsbedienungen liefert das zyklisch-periodische Modell komplexwertige kinematische Koppelbedingungen für jede der beiden Schaufeln 10 und 28. Aus diesen Koppelbedingungen werden Steuersignale für einen der als Testschaufel eingesetzten Turbinenschaufel 10 zugeordneten ersten Aktuator 24 und einen der Referenzschaufel 28 zugeordneten zweiten Aktuator 24' ermittelt. Die beiden Aktuatoren 24 und 24' greifen jeweils am rechten Koppelufer der jeweiligen Deckplatten 12 bzw. 12' der beiden Schaufeln 10, 28' an.

Die Aktuatoren 24 und 24' üben daraufhin Korrekturkräfte zur Bewirkung einer dem Steuersignal entsprechenden Verschiebung auf die rechten Koppelufer der Deckplatten 12 bzw. 12' der als Testschaufel eingesetzten Turbinenschaufel 10 sowie den Referenzschaufel 28 aus. Die zur Einprägung der sich aus dem Steuersignal ergebenden Verschiebung benötigten Korrekturkräfte werden durch einen elektronischen Regelkreis bestimmt. Die Korrekturkräfte stellen den über das rechentechnische Modell ermittelten Einfluss mindestens einer mit der als Testschaufel eingesetzten Turbinenschaufel 10 über eine Deckplatte 12 gekoppelten weiteren Turbinenschaufel 10 dar. Das resultierende Schwingungsverhalten der als Testschaufel eingesetzten Turbinenschaufel 10 kann nun mittels des ersten Sensors 22 am linken Koppelufer der zugehörigen Deckplatte 12 gemessen werden. Dabei kann bei einer Schwingungsanregung der als Testschaufel eingesetzten Turbinenschaufel 10 über das erste Schwungelement 20 mittels einer sich über die Zeit erhöhenden Anregungsfrequenz die Resonanzfrequenz der Testschaufel unter dem Einfluss von benachbarten mit der Testschaufel gekoppelten Turbinenschaufeln 10 gemessen werden. Damit kann auf das Schwingungsverhalten der als Testschaufel eingesetzten Turbinenschaufel 10 während eines realen Betriebs der Turbine basierend auf den Ergebnissen der Messung des Schwingungsverhaltens der Testschaufel in der Messanordnung rückgeschlossen werden.

Die Anregung der Grundschwingung der als Testschaufel eingesetzten Turbinenschaufel 10 kann anstatt durch das in Fig. 2 dargestellte erste Schwungelement 20 auch über den ersten Aktuator 24 ausgeübt werden. Damit können aufwändige im Schleuderbunker durchzuführende Koppelmessungen von mehreren unter Verwendung von Koppelelementen auf einem Läufer 14 montierten Turbinenschaufeln 10 unter Realbedingungen entfallen. Vielmehr reicht die Messung an der einzelnen als Testschaufel eingesetzten Turbinenschaufel 10 aus, um das Schwingungsverhalten der gesamten Turbine verlässlich vorherzusagen.

## Patentansprüche

**1.** Verfahren zum Messen des Schwingungsverhaltens mindestens einer Testschaufel (10) einer Turbine, **gekennzeichnet durch** die Schritte:
- Abbilden einer Kopplung der mindestens einen Testschaufel (10) an mindestens einer Modellschaufel während eines realen Betriebs der Turbine als rechentechnisches Modell,
- Umsetzen des rechentechnischen Modells in kinematische Koppelbedingungen für die mindestens eine Testschaufel (10),
- Ausüben von Kräften an der mindestens einen Testschaufel (10) entsprechend den kinematischen Koppelbedingungen und
- Messen des resultierenden Schwingungsverhaltens der mindestens einen Testschaufel (10).

**2.** Verfahren nach Anspruch 1,
**dadurch gekennzeichnet, dass**
das Umsetzen des rechentechnischen Modells in kinematische Koppelbedingungen für die mindestens eine Testschaufel (10) die folgenden Schritte umfasst:
- Ausüben von Schwingungsanregungskräften auf die mindestens eine Testschaufel (10),
- kontinuierliches Messen des kinematischen Verhaltens der mindestens einen Testschaufel (10) und Umsetzen des gemessenen kinematischen Verhaltens der mindestens einen Testschaufel mittels des rechentechnischen Modells in aus der Kopplung mit der mindestens einen Modellschaufel resultierende kinematische Koppelbedingungen für die mindestens eine Testschaufel (10),
- und/oder dass die an der mindestens einen Testschaufel (10) entsprechend den kinematischen Koppelbedingungen ausgeübten Kräfte kontinuierlich an die iterativ bestimmten kinematischen Koppelbedingungen angepasste Korrekturkräfte zur Berücksichtigung des Einflusses der Kopplung mit der mindestens einen Modellschaufel auf die Schwingung der Testschaufel (10) enthalten.

**3.** Verfahren nach Anspruch 1 oder 2,
**dadurch gekennzeichnet, dass**
die Kräfte entsprechend den kinematischen Koppelbedingungen von einer durch mindestens einen Regelkreis gesteuerten Einrichtung (26) ausgeübt werden.

**5.** Verfahren nach Anspruch 4,
**dadurch gekennzeichnet, dass**
die Einrichtung (26) mindestens einen Sensor (22) und mindestens einen Aktuator (24) umfasst.

**6.** Verfahren nach einem der vorausgehenden Ansprüche,
**dadurch gekennzeichnet, dass**
die als rechentechnisches Modell abgebildete Kopplung einer Testschaufel (10) an mindestens einer Modellschaufel eine Kopplung oberhalb des Fußbereichs der Schaufeln ist.

**7.** Verfahren nach einem der vorausgehenden Ansprüche,
**dadurch gekennzeichnet, dass**
das rechentechnische Modell durch komplexwertige kinematische Koppelbedingungen abgebildet wird.

**8.** Verfahren nach Anspruch 7,
**dadurch gekennzeichnet, dass**
die komplexwertigen kinematischen Koppelbedingungen durch Ausüben von Kräften an zwei Schaufeln (10, 28) wiedergegeben werden.

**9.** Verfahren nach Anspruch 8,
**dadurch gekennzeichnet, dass**
eine der beiden Schaufeln (10, 28), an denen Kräfte ausgeübt werden, die mindestens eine Testschaufel (10) ist und die andere der beiden Schaufeln eine in Verbindung mit unterschiedlichen Testschaufeln verwendete Referenzschaufel (28) ist.

**10.** Verfahren nach einem der vorausgehenden Ansprüche,
**dadurch gekennzeichnet, dass**
die mindestens eine Testschaufel (10) beim Messen an einem Schwingungsanreger (18) einer Messeinrichtung gehaltert ist.

**11.** Verfahren nach einem der vorausgehenden Ansprüche, **gekennzeichnet durch** den Schritt:
Rückschließen auf das Schwingungsverhalten der mindestens einen Testschaufel (10) während eines realen Betriebs der Turbine, basierend auf den Ergebnissen der Messung des Schwingungsverhaltens der mindestens einen, den kinematischen Koppelbedingungen unterworfenen Testschaufel (10).

**12.** Verfahren nach Anspruch 11,
**dadurch gekennzeichnet, dass**
aus dem rückgeschlossenen Schwingungsverhalten der mindestens einen Testschaufel (10) während eines realen Betriebs der Turbine die Eigenfrequenz der Testschaufel während des realen Betriebs der Turbine bestimmt wird.

**13.** Verfahren nach Anspruch 11 oder 12,
**dadurch gekennzeichnet, dass**
beim Rückschließen auf das Schwingungsverhalten der mindestens einen Testschaufel (10) während eines realen Betriebs der Turbine eine Frequenzveränderung an der Schaufel aufgrund unterschiedlicher Eigenschaften eines Rotors vernachlässigt wird.

**14.** Verfahren nach einem der Ansprüche 11 bis 13,
**dadurch gekennzeichnet, dass**
beim Rückschließen auf das Schwingungsverhalten der mindestens einen Testschaufel (10) während eines realen Betriebs der Turbine der Einfluss der Fliehkraft als rechentechnisches Modell abgebildet und berücksichtigt wird.

**15.** Verfahren nach einem der Ansprüche 11 bis 14,
**dadurch gekennzeichnet, dass**
beim Rückschließen auf das Schwingungsverhalten der mindestens einen Testschaufel (10) auf das Schwingungsverhalten des gesamten Schaufelverbandes der Turbine im realen Betrieb rückgeschlossen wird.
